# NEUE EUROPÄISCHE PATENTSCHRIFT

(11) **EP 0 171 675 B2**
(45) Veröffentlichungstag und Bekanntmachung des Hinweises auf die Entscheidung über den Einspruch: **28.08.1996**
(45) Hinweis auf die Patenterteilung: 02.11.1989
(21) Anmeldenummer: 85109301.3
(22) Anmeldetag: 24.07.1985
(51) Int. Cl.: C22F 1/18, G21C 3/06

(54) **Hüllrohr aus einer Zirkoniumlegierung insbesondere für einen Kernreaktorbrennstab und Verfahren zum Herstellen dieses Hüllrohres**
Zirconium alloy cladding tube, particularly for a nuclear-fuel rod, and process for the manufacture of this cladding tube
Gaine en alliage de zirconium, en particulier pour barre de combustible nucléaire et procédé pour sa fabrication

(30) Priorität: 06.08.1984 DE 3428954
(43) Veröffentlichungstag der Anmeldung: 19.02.1986
(73) Patentinhaber: SIEMENS AKTIENGESELLSCHAFT, 80333 München (DE); NRG NUKLEARROHR-GESELLSCHAFT mbH, D-4100 Duisburg (DE)
(72) Erfinder: Reschke, Siegfried, Dr. Dipl.-Ing., D-4100 Duisburg 1 (DE); Steinberg, Eckard, D-8520 Erlangen (DE)
(74) Vertreter: Fuchs, Franz-Josef, Dr.-Ing.

(56) Entgegenhaltungen:
- EP-A- 0 085 553
- DE-A- 2 951 102
- US-A- 3 287 111
- US-A- 4 000 013
- W.Domke, "Werkstoffkunde und Werkstoffprüfung", 8 Auflage, 1979, S.46 und 382
- DIN 17014
- WAPD TM 585
- Nuclear Science Abstracts, Vol. 21, Abstract no. 11221
- DIALNET database search

## Beschreibung

Die Erfindung betrifft ein Verfahren zum Herstellen eines Hüllrohres entsprechend Patentanspruch 1.

An solche Hüllrohre sind hohe Anforderungen besonders hinsichtlich der sogenannten «Spannungsrißkorrosion» zu stellen. Bei dieser Spannungsrißkorrosion handelt es sich um einen Korrosionsmechanismus auf der Innenseite des Hüllrohres im Kernreaktor, für den das Dehnen des Hüllrohres infolge des Schwellens des eingefüllten Kernbrennstoffes und vom Kembrennstoff freigesetzte Kernspaltprodukte wie Jod verantwortlich sind. Die Spannungsrißkorrosion spielt eine besondere Rolle bei Kernreaktorbrennstäben, die in Siedewasserkernreaktoren eingesetzt sind. Dort können insbesondere abrupte Leistungswechsel des Kernreaktors zum Durchbrechen der Hüllrohrwände der Kernreaktorbrennstäbe infolge Spannungsrißkorrosion führen.

Aus der deutschen Auslegeschrift 25 50 029 ist bekannt, zur Vermeidung der Spannungsrißkorrosion Hüllrohre aus einer Zirkoniumlegierung für Kernreaktorbrennstäbe mit einer Innenauskleidung aus Reinstzirkonium zu versehen. Diese Innenauskleidung wird durch Coextrusion des Hüllrohrrohlings mit einem Rohr aus Reinstzirkonium gewonnen, welches in die Bohrung des Hüllrohrrohlings eingesetzt und dort mit dem Hüllrohrrohling verschweißt wurde. Reinstzirkonium ist an sich schon ein sehr teurer Werkstoff. Hinzu kommt, daß das Rohr aus Reinstzirkonium ganz genau in die Bohrung des Hüllrohrrohlings eingepaßt werden muß, wenn bei der nachfolgenden Coextrusion eine einwandfreie metallurgische Verbindung zwischen dem Reinstzirkonium und der Zirkoniumlegierung des Hüllrohres stattfinden soll. Ein mit Reinstzirkonium innen ausgekleidetes Hüllrohr aus einer Zirkoniumlegierung kann also nur durch ein aufwendiges und teures Verfahren gewonnen werden.

Mit der Erfindung wird die Aufgabe gelöst, die Herstellung von Hüllrohren aus einer Zirkoniumlegierung, die widerstandsfähig gegen Spannungsrißkorrosion sind, zu vereinfachen und kostengünstiger zu gestalten.

Zur Lösung dieser Aufgabe ist ein Hüllrohr der eingangs erwähnten Art erfindungsgemäß dadurch gekennzeichnet, daß der geometrische Mittelwert der Komdurchmesser in der Zirkoniumlegierung kleiner als oder gleich 3 µm ist.

Es wurde gefunden, daß infolge des feinen Korns beim Dehnen des Hüllrohres eines Kernreaktorbrennstabes in einem Kernreaktor durch Anschwellen des Kembrennstoffes eine Vielzahl von Mikrorissen in der Zirkoniumlegierung des Hüllrohres entstehen mit einer besonders großen Gesamtoberfläche, an der die aus dem Kernbrennstoff freigeseitzten chemisch aktiven Kernspaltprodukte absorbiert und in inaktive chemische Verbindungen umgewandelt werden. Tiefgehende Einzelrisse, an denen eine Spannungsrißkorrosion auftreten d.h. das Hüllrohr voll durchkorrodieren könnte, werden durch das Feinkom der Zirkoniumlegierung des erfindungsgemäßen Hüllrohres vermieden.

Günstigerweise liegt der geometrische Mittelwert der Korndurchmesser im Bereich von 2.5 µm bis 2 µm.

Von Vorteil ist es, wenn das Ausgangsrohr so gepilgert wird, daß sich eine Querschnittsveränderung der Rohrwand im Bereich von 90 bis 98 % ergibt.

Es ist günstig, wenn das Ausgangsrohr in Pilgerschritten gepilgert und zwischen zwei Pilgerschritten spannungsfrei geglüht wird. Spannungsfreiglühen erfolgt bei einer Glühtemperatur, die zwar ausreichend hoch ist, daß sich innere mechanische Spannungen in der Zirkoniumlegierung abbauen können, die aber andererseits nicht die Glühtemperatur des Rekristallisationsglühens erreicht, bei dem es zur Vergröberung des Koms in der Zirkoniumlegierung kommt. Günstigerweise wird die Glühtemperatur zum Spannungsfreiglühen im Bereich von 400 bis 500°C gewählt und 1 bis 5 Stunden aufrechterhalten.

Der Komdurchmesser in der Zirkoniumlegierung kann nach ASTM (American Society for Testing Materials) Designation E112-61 bestimmt werden. Der geometrische Mittelwert ist als (d₁.d₂..... .dᵢ..... .dₙ)^{1/n} definiert mit dᵢ = Korndurchmesser des i-ten Korns. Eine Pilgermaschine ist in der US-Patentschrift 42 33 834 beschrieben.

Aus der EP-A-0 085 553 ist es zwar bekannt, Zirkoniumlegierung (Zirkaloy 4) zur Aufrechterhaltung einer Verteilung ausgeschiedener Legierungsbestandteile zwischen zwei Pilgerschritten zwischenzuglühen und nach dem Pilgem entweder einem Spannungsfreiglühen oder einem Rekristallisationsglühen zu unterwerfen, das Zwishenglühen erfolgt jedoch bei 578°C Glühtemperatur während einer Glühzeit von acht Stunden nach einer Kaltverformung von mindestens 50 % und ist deshalb kein Spannungsfreiglühen, sondern ein Rekristallisationsglühen.

Aus US-A-4 000 013 ist ferner eine Zirkoniumlegierung bekannt, die nach Verformung rekristallisiert wurde und durchschnittliche Korngröße von 0.1 bis 0.5 µm aufweist. Diese Zirkoniumlegierung hat jedoch die Form einer Stange, und die Verformung beträgt insgesamt nur 70 bis 75%.

Die Erfindung und ihre Vorteile seien anhand der Zeichnung näher erläutert :

Fig. 1 zeigt in schematischer Seitenansicht beide Pilgerbacken einer Pilgermaschine mit einem in Bearbeitung befindlichen Rohr aus Zirkoniumlegierung.

Fig. 2 zeigt eine graphische Darstellung von Prüfergebnissen an erfindungsgemäßen Hüllrohren und an Vergleichshüllrohren.

Ein Ausgangsrohr bestht aus einer mit Zircaloy 2 bezeichneten Zirkoniumlegierung, die 1.2-1.7 Gew. % Zinn, 0.07-0.2 Gew.% Eisen, 0.05-0.15 Gew. % Chrom, 0.03-0.08 Gew. % Nickel, 0.07-0.15 Gew. % Sauerstoff und den Rest Zirkonium enthält. Dieses Ausgangsrohr hat einen Außendurchmesser von 63.5 mm und eine Wandstärke von 11 mm. Der geometrische Mittelwert der Komdurchmesser in dieser Zirkoniumlegierung beträgt 20 µm. Dieses Ausgangsrohr wird in einer Pilgermaschine in einem ersten Pilgerschritt rißfrei zu einem Zwischenrohr mit einem Außendurchmesser von 30 mm und einer Wandstärke von 5.5 mm gepilgert. Dieses Zwischenrohr wird hierauf 2 1/2 Stunden lang bei 480 °C spannungsfrei geglüht. Sodann wird dieses Zwischenrohr in einem zweiten Pilgerschritt erneut in der Pilgermaschine rißfrei zu einem neuen Zwischenrohr mit einem Außendurchmesser von 18.8 mm und einer Wandstärke von 2.5 mm gepilgert. Dieses neue Zwischenrohr wird wieder 2 1/2 Stunden lang bei einer Temperatur von 480 °C spannungsfrei geglüht. Nach dem Abkühlen wird das neue Zwischenrohr schließlich in der Pilgermaschine in einem dritten Pilgerschritt zum fertigen Hüllrohr mit einem Außendurchmesser von 12.5 mm und einer Wandstärke von 0.85mm rißfrei gepilgert. Der geometrische Mittelwert der Komdurchmesser in der Zirkoniumlegierung dieses fertigen Hüllrohres beträgt 2 bis 3 µm.

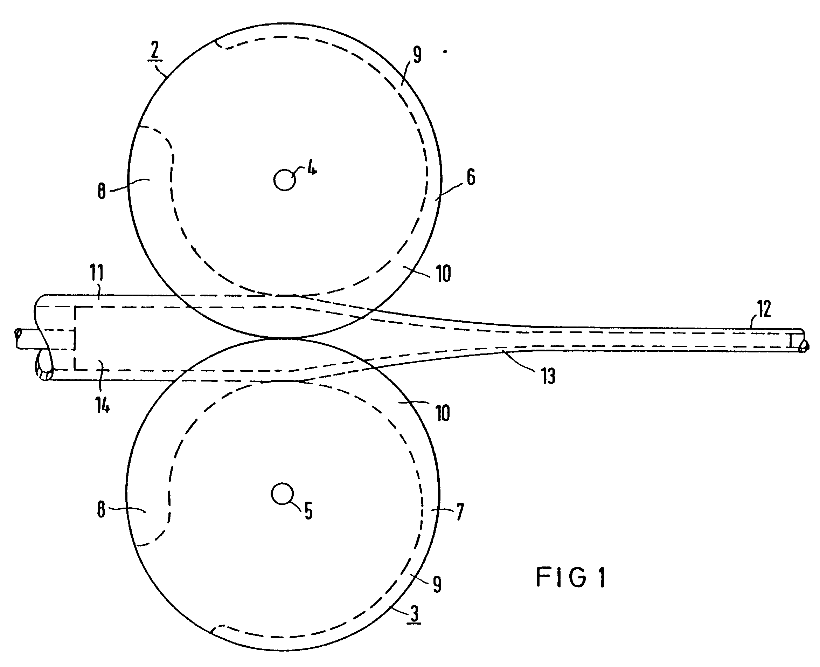

In Fig. 1 ist ein mit der Pilgermaschine durchgeführter Pilgerhub verdeutlicht und die Situation etwa zu Beginn dieses Pilgerhubes dargestellt Zwei an einem nicht dargestellten Walzgerüst übereinander angeordnete Pilgerbacken 2 und 3 bestehen jeweils aus einer zylinderförmigen Stahlscheibe. Beide Pilgerbacken 2 und 3 haben die gleichen geometrischen Abmessungen und jede dieser beiden Pilgerbacken 2 und 3 sitzt auf einer zur Zeichenebene der Fig. 1 rechtwinkligen Achse 4 und 5. Auf der Mantelfläche besitzen beide Pilgerbacken 2 und 3 eine gleich ausgebildete Gravur 6 und 7, die ein Einlaufkaliber 8, ein Schlichtkaliber 9 und zwischen diesen beiden Kalibem ein sich vom Einlaufkaliber 8 zum Schlichtkaliber 9 hin verjüngendes Arbeitskaliber 10 hat. Beide Pilgerbacken 2 und 3 berühren sich mit ihren Mantelflächen derart, daß sich an der Eingriffslinie der beiden Pilgerbacken 2 und 3 während der Umdrehung um die Drehachsen 4 und 5 stets die Stellen der beiden Gravuren 6 und 7 mit dem gleichen Kaliber befinden.

Das Rohr aus Zirkoniumlegierung ist rechtwinklig zu der durch die Achsen 4 und 5 bestimmte Ebene angeordnet. Links von den Pilgerbacken 2 und 3 befindet sich in Fig. 1 das Vorrohr 11 und rechts das gepilgerte Rohr 12. Das Vorrohr 11 geht über eine sogenannte Pilgertüte 13 in das gepilgerte Rohr 12 über. Innerhalb des Rohres befindet sich ein Dorn 14, der mit seinem Durchmesser an einem Ende dem Vorrohr 11, am anderen Ende dem gepilgerten Rohr 12 und zwischen diesen beiden Enden dem sich über die Länge der Pilgertüte 13 konisch verjüngenden Sollinnendurchmesser der Pilgertüte 13 angepaßt ist.

Zu Beginn eines Pilgerhubes befindet sich das Vorrohr 11 derart in den beiden Einlaufkalibern 8 der Gravuren 6 und 7 der beiden Pilgerbacken 2 und 3, daß es die durch die Achsen 4 und 5 bestimmte Ebene, in der auch die Eingriffslinie der Mantelflächen der beiden Pilgerbacken 2 und 3 liegt, um etwa 3 mm zur Seite des gepilgerten Rohres 12 hin durchragt. Femer befindet sich zu Beginn dieses Pilgerhubes das Ende des Einlaufkalibers 8 der beiden Gravuren 6 und 7 am Arbeitskaliber 10 an der Eingriffslinie der Mantelflächen der beiden Pilgerbacken 2 und 3.

Diese Pilgerbacken 2 und 3 werden im nicht dargestellten Walzgerüst mit gegeneinander gepreßten und sich in Eingriff befindlichen Mantelflächen zur Durchführung des Pilgerhubes in Fig. 1 so von links nach rechts bewegt, daß die miteinander fluchtenden Längsachsen des Vorrohres 11, der Pilgertüte 13 und des gepilgerten Rohres 12 stets rechtwinklig zu der durch die Achsen 4 und 5 gebildeten Ebene sind. Die Bewegung der Pilgerbacken 2 und 3 nach rechts in Fig. 1 ist beendet, wenn sich das Fertigrohr 12 zwischen den Pilgerbacken 2 und 3 im Schlichtkaliber 9 der Gravuren 6 und 7 befindet. Der Dorn 14 hat mindestens die Länge dieser Hubbewegung.

Am Ende dieses Pilgerhubes werden beide Pilgerbacken 2 und 3 im nicht dargestellten Walzgerüst voneinander abgehoben und in ihre Ausgangsstellung nach links in Fig. 1 zurückbewegt. Unterdessen erfährt das Vorrohr 11 einen Vorschub um etwa 3 mm in Richtung seiner Längsachse nach rechts in Fig. 1 und eine Drehung um diese Längsachse um etwa 45°. Daraufhin werden die Pilgerbacken 2 und 3 im nicht dargestellten Walzgerüst wieder mit ihren Mantelflächen so zum Eingriff gebracht, daß sich an der Eingriffslinie der Mantelflächen das Ende des Einlaufkalibers 8 der beiden Gravuren 6 und 7 zum Arbeitskaliber 10 hin befindet Hierauf wird ein weiterer Pilgerhub wie oben beschrieben durchgeführt.

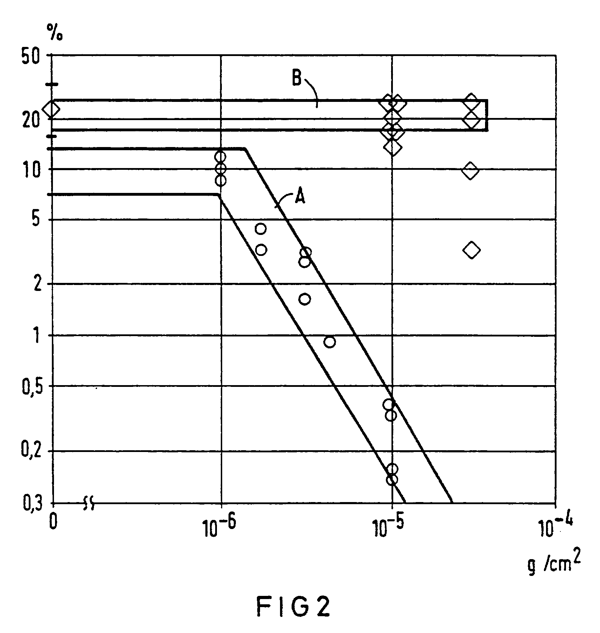

In der graphischen Darstellung nach Fig. 2 ist die radiale Dehnung in Prozent von an beiden Enden gasdicht verschlossenen, mit Helium und Jod gefüllten Hüllrohren über der Jodkonzentration in Gramm/cm² Hüllrohrinnenfläche aufgetragen. Alle Hüllrohre haben gleiche Länge, einen Außendurchmesser von 12.5 mm und eine Wandstärke von 0.85 mm. Auch bestehen alle Hüllrohre aus Zircaloy 2. Die verschlossenen Hüllrohre sind erwärmt worden, so daß sie sich aufgrund ihrer Heliumfüllung dehnten. Die in der graphischen Darstellung eingetragenen kreisförmigen Meßpunkte geben an, bei welcher Dehnung Hüllrohre mit einem mittleren geometrischen Komdurchmesser von 8 bis 10 µm in der Zirkoniumlegierung in Abhängigkeit von der Jodkonzentration im Hüllrohr infolge von Korrosion durch das Jod brachen. Die quadratischen Meßpunkte geben demgegenüber die Dehnung in Abhängigkeit von der Jodkonzentration an, bei der erfindungsgemäße Hüllrohre mit einem geometrischen Mittelwert der Korndurchmesser in der Zirkoniumlegierung von 2 bis 3 µm infolge Jodkorrosion brachen. Da Jod dasjenige Kernspaltprodukt ist, das hauptsächlich die Spannungsrißkorrosion der Hüllrohre von Brennstäben bewirkt, geben die in der graphischen Darstellung nach Fig. 2 eingetragenen Werte einen guten Aufschluß über die Widerstandsfähigkeit erfindungsgemäßer Hüllrohre aus einer Zirkoniumlegierung gegen Spannungsrißkorrosion.

Wie der in der graphischen Darstellung nach Fig. 2 eingetragene, abgeknickte Balken A, in dem sich alle kreisförmigen Meßpunkte befinden, verdeutlicht, nimmt die Bereitschaft zur Spannungsrißkorrosion von Hüllrohren mit einem geometrischen Mittelwert der Komdurchmesser in der Zirkoniumlegierung von 8 bis 10 µm mit steigender Jodkonzentration ganz erheblich zu, während erfindungsgemäße Hüllrohre mit einem geometrischen Mittelwert der Komdurchmesser in der Zirkoniumlegierung im Bereich von 2 bis 3 µm entsprechend der quadratischen Meßpunkte erst bei sehr viel höheren Jodkonzentrationen eine vergleichbare Bereitschaft zur Spannungsrißkorrosion zeigen.

Der Querbalken B in der graphischen Darstellung nach Fig. 2 bei einer Dehnung von etwa 20 % entspricht dem Verhalten von Hüllrohren, die in bekannter Weise eine Innenauskleidung aus Reinstzirkonium mit einer Dicke von 0.1 mm haben. Das Reinstzirkonium enthält Verunreinigungen bis zu höchstens 4 000 ppm und hat insbesondere einen Sauerstoffgehalt kleiner als 700ppm, einen Eisengehalt kleiner als 550 ppm, einen Chromgehalt kleiner als 200 ppm und einen Kohlenstoffgehalt kleiner als 120 ppm. Die quadratischen Meßpunkte für erfindungsgemäße Hüllrohre zeigen, daß letztere hin bis zu verhältnismäßig hohen Jodkonzentrationen die gleiche hohe Widerstandsfähigkeit gegen Spannungsrißkorrosion haben wie die Hüllrohre mit der Innenauskleidung aus Reinstzirkonium.

## Patentansprüche

1. Verfahren zum Herstellen eines Hüllrohres einer Zirkoniumlegierung, insbesondere für einen Kernreaktorbrennstab, bei dem ein Ausgangsrohr ohne Rekristallisationsglühen und rißfrei so gepilgert wird, daß sich eine Querschnittsänderung der Rohrwand von 90% oder mehr ergibt, und ein geometrischer Mittelwert der Korndurchmesser in der Zirkoniumlegierung des fertigen Hüllrohres kleiner oder gleich 3µm erzielt wird."

2. Verfahren nach Anspruch 1, bei dem sich eine Querschnittsveränderung der Rohrwand im Bereich von 90 bis 98 % ergibt.

3. Verfahren nach Anspruch 2, bei dem das Ausgangsrohr in Pilgerschritten gepilgert und zwischen zwei Pilgerschritten spannungsfrei geglüht wird.

4. Verfahren nach Anspruch 3, bei dem die Glühtemperatur zum Spannungsfreiglühen im Bereich von 400-500 °C gewählt und 1 bis 5 Stunden lang aufrechterhalten wird.

## Claims

1. Process for the manufacture of a cladding tube of a zirconium alloy, particularly for a nuclear reactor fuel rod, in which an initial tube is pilger-rolled without recrystallisation annealing and free of cracks, so that there results a change of 90% or more in the cross-section of the tube wall and there is achieved a geometric average of the grain diameter in the zirconium alloy of the finished cladding tube of less than or equal to 3 µm.

2. Process according to claim 1, in which there results a change in the range of 90 to 98% in the cross-section of the tube wall.

3. Process according claim 2, in which the initial tube is pilger-rolled in pilgrim steps and annealed to relieve stresses between two pilgrim steps.

4. Process according to claim 3, in which, for the annealing to relieve stresses, an annealing temperature in the range of 400 - 500°C is chosen and maintained for 1 to 5 hours.

## Revendications

1. Procédé de fabrication d'une gaine en alliage de zirconium, notamment pour un crayon combustible de réacteur nucléaire, qui consiste à laminer à pas de pèlerin un tube de départ, sans recuit de recristallisation et sans fissures, de manière à obtenir une modification de la section transversale de la paroi du tube de 90 % ou supérieure à 90 % et une moyenne géométrique des diamètres des grains de l'alliage de zirconium de la gaine finie inférieure ou égale à 3 microns.

2. Procédé suivant la revendication 1, caractérisé en ce qu'il consiste à obtenir une modification de la section transversale de la paroi du tube de l'ordre de 90 à 98 %.

3. Procédé suivant la revendication 2, qui consiste à laminer à pas de pèlerin le tube de départ par des stades de laminage à pas de pèlerin, à de procéder à un recuit sans contrainte entre deux stades de laminage à pas de pèlerin.

4. Procédé suivant la revendication 3, qui consiste à choisir la température du recuit, pour le recuit sans contrainte, entre 400 et 500°C et à la maintenir pendant 1 à 5 heures.
